# EUROPÄISCHE PATENTANMELDUNG

(11) **EP 1 418 081 A2**
(43) Veröffentlichungstag der Anmeldung: **12.05.2004**
(21) Anmeldenummer: 03023801.8
(22) Anmeldetag: 17.10.2003
(51) Int. Cl.: B60K 17/348, F16H 15/38

(54) **Stufenloses Getriebe für allradgetriebene Fahrzeuge**

(30) Priorität: 06.11.2002 DE 10251560
(71) Anmelder: Bayerische Motoren Werke Aktiengesellschaft, 80809 München (DE)
(72) Erfinder: Wolf, Lothar, 81539 München (DE); Gabriel, Hans, 80939 München (DE); Kress, Thomas, 85221 Dachau (DE)

(57) **Zusammenfassung**

Stufenloses Getriebe für allradgetriebene Fahrzeuge, mit einer Antriebswelle, welche ein aus einer ersten und einer zweiten Getriebeeinheit gebildetes stufenloses Getriebe antreibt. Die erste Getriebeeinheit treibt einen Vorderradantrieb an. Die zweite Getriebeinheit treibt einen Hinterradantrieb an. Der Vorderradantrieb und der Hinterradantrieb sind durch einen Ausgang eines ersten bzw. zweiten Summierungsgetriebes gebildet. Die Summierungsgetriebe weisen jeweils einen ersten Getriebeeingang auf, der mit der ersten bzw. zweiten Getriebeeinheit kinematisch gekoppelt ist und jeweils einen zweiten Getriebeeingang, der mit der Antriebswelle kinematisch gekoppelt ist.

## Beschreibung

Die vorliegende Erfindung betrifft ein stufenloses Getriebe für allradgetriebene Fahrzeuge gemäß dem Oberbegriff des Patentanspruches 1.

Toroidgetriebe bilden einen Grundtypus stufenloser Getriebe. Bei Toroidgetrieben unterscheidet man Volltoroidgetriebe und Halbtoroidgetriebe. Was unter den Begriffen "Volltoroidgetriebe" und "Halbtoroidgetriebe" zu verstehen ist, ist ausführlich in der DE 198 26 591 A1 von Prof. Peter Tenberge beschrieben. Auf den Inhalt der DE 198 26 591 A1 wird in der vorliegenden Anmeldung in vollem Umfang Bezug genommen. Die vorliegende Anmeldung betrifft Volltoroidgetriebe, weil diese gegenüber Halbtoroidgetrieben verschiedene Vorteile haben, auf die ebenfalls ausführlich in der DE 198 26 591 A1 eingegangen wird.

Ein Volltoroidgetriebe gemäß dem Oberbegriff des Patentanspruches 1 ist aus der EP 0 743 218 B1 bekannt, wo im Zusammenhang mit Fig. 3 ein Volltoroidgetriebe mit zwei Volltoroidgetriebeeinheiten beschrieben ist. Die eine Volltoroidgetriebeeinheit ist zum Antrieb der Vorderräder und die andere Volltoroidgetriebeeinheit ist zum Antrieb der Hinterräder eines allradgetriebenen Fahrzeugs vorgesehen. Mit diesem Getriebe kann zwar ein Eingangsdrehmoment in variierbarem Verhältnis auf Vorder- und Hinterradantrieb aufgeteilt werden. Jedoch ist es allein mit diesem Getriebe nicht möglich einen Anfahrzustand darzustellen (Geared-Neutral), d.h. einen einen Zustand, bei dem bei einer vorgegebenen Antriebsdrehzahl die Abtriebsdrehzahlen für die Vorderräder und für die Hinterräder Null sind.

Aus der DE 198 59 380 A1 ist ein Toroidgetriebe für allradgetriebene Fahrzeuge bekannt, das aus zwei koaxial zueinander angeordneten Halbtoroidgetriebeeinheiten besteht. Jede dieser beiden Halbtoroidgetriebeeinheiten weist eine Antriebsscheibe und eine Abtriebsscheibe auf, zwischen denen in Umfangsrichtung verteilt mehrere Roller angeordnet sind, welche Drehmoment von der Antriebsscheibe auf die Abtriebsscheibe übertragen. Von einer Eingangswelle fließt Drehmoment in die beiden Antriebsscheiben der Halbtoroidgetriebeinheiten und von dort über die Roller zu den beiden Abtriebsscheiben. Die Roller und die Abtriebsscheiben sind zwischen den beiden Antriebsscheiben angeordnet. Von den Abtriebsscheiben fließen die Drehmomente jeweils über eine zugeordnete Zahnradstufe in eine Ausgangswelle zum Antrieb der Vorderräder bzw. in eine Ausgangswelle zum Antrieb der Hinterräder eines Fahrzeugs. Das von der Eingangswelle kommende Drehmoment ist also auch bei diesem Getriebe mit einem variablen Verteilungsverhältnis auf die Vorderachse und die Hinterachse aufteilbar. Wie bereits erwähnt haben Halbtoroidgetriebe aber diverse Nachteile und bleiben daher im Folgenden außer Betracht.

Aufgabe der Erfindung ist es, ein stufenloses Getriebe für allradgetriebene Fahrzeuge zu schaffen, das eine gegenüber dem Stand der Technik verbesserte Funktionalität aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem stufenlosen Getriebe mit zwei Getriebeeinheiten aus, die von einer gemeinsamen Antriebswelle angetrieben werden. Die eine Getriebeeinheit ist zum Antrieb der Vorderräder und die andere Getriebeeeinheit ist zum Antrieb der Hinterräder vorgesehen.

Der Kern der Erfindung besteht darin, die Abtriebsdrehzahlen der Getriebeeinheiten mittels eines Summationsgetriebes oder mittels zwei Summationsgetrieben zu verändern. Das bzw. die Summationsgetriebe sind so konzipiert, dass aus den Ausgangsdrehzahlen der Getriebeeinheiten und der Antriebswellendrehzahl resultierende Abtriebsdrehzahlen bzw. resultierende Abtriebsmomente für die Vorderachse und die Hinterachse generiert werden, wobei die resultierenden Abtriebsdrehzahlen bzw. die resultierenden Abtriebsmomente durch Variieren der Übersetzungen der Getriebeeinheiten auf Null gebracht werden können.

Nach einer Weiterbildung der Erfindung ist dem Vorderachsantrieb und dem Hinterachsantrieb ein gemeinsames Summationsgetriebe zugeordnet.

Jedoch kann dem Vorderachsantrieb und dem Hinterachsantrieb auch jeweils ein Summationsgetriebe separat zugeordnet sein. In diesem Fall ist das eine Summationsgetriebe zwischen der ersten Getriebeeinheit und dem Vorderradantrieb und das andere Summationsgetriebe ist zwischen der zweiten Getriebeeinheit und dem Hinterradantrieb angeordnet. Die Summationsgetriebe weisen jeweils zwei Getriebeeingänge auf. Der erste Getriebeeingang ist mit dem "Ausgang" der ersten bzw. zweiten Getriebeeinheit kinematisch gekoppelt. Der zweite Getriebeeingang der Summationsgetriebe ist jeweils mit der Antriebswelle kinematisch gekoppelt. Unter dem Begriff "kinematisch gekoppelt" ist zu verstehen, dass die Getriebeeingänge der Summationsgetriebe entweder unmittelbar mit einer Ausgangswelle der Getriebeeinheiten bzw. mit der Antriebeswelle verbunden sind oder aber über "Zwischenelemente", wie z.B. Zahnradstufen.

Vorzugsweise handelt es sich bei dem stufenlosen Getriebe um ein Toroidgetriebe mit zwei Volltoroidgetriebeeinheiten. Prinzipiell sind aber auch andere stufenlose Getriebeeinheiten, wie z.B. Schubgliederkettengetriebe etc. verwendbar. Wenn im folgenden von Volltoroidgetriebeeinheiten die Rede ist, dann ist dies ganz allgemein zu verstehen und auf andere stufenlose Getriebetypen übertragbar.

Ein wesentlicher Vorteil, der mit dem Summationsgetriebe bzw. mit den Summationsgetrieben erreicht, wird besteht darin, dass ein Anfahrzustand ("geared neutral") darstellbar ist. Bei einem Volltoroidgetriebe mit zwei Volltoroidgetriebeeinheiten können nämlich über die Stellung der Roller der Volltoroidgetriebeeinheiten die Abtriebsdrehzahlen bzw. Drehmomente der Getriebeeinheiten eingestellt werden. In Abhängigkeit von der Drehzahl der Antriebswelle bzw. in Abhängigkeit von den Drehzahlen an den zweiten Getriebeeingängen der Summationsgetriebe können die Abtriebsdrehzahlen der Getriebeeinheiten, d.h. die Eingangsdrehzahlen der ersten Getriebeeingänge der Summationsgetriebe so gewählt werden, dass die Ausgangsdrehzahlen am Vorder- und Hinterradantrieb Null werden. Somit kann allein durch die Einstellung einer bestimmten Übersetzung der Getriebeeinheiten ein Anfahrzustand mit Ausgangsdrehzal "Null" dargestellt werden. Eine Anfahrkupplung wie bei herkömmlichen Fahrzeuge ist nicht erforderlich.

Vorzugsweise sind die Volltoroidgetriebeeinheiten und die Antriebswelle jeweils über eine Kupplung mit dem zugeordneten Eingang des Summationsgetriebes verbunden. Die Summationsgetriebe weisen dann also jeweils zwei Kupplungen auf, was noch näher erläutert wird.

Im folgenden wird die Erfindung anhand von Ausführungsbeispielen im Zusammenhang mit der Zeichnung näher erläutert. Es zeigen:
- Figur 1: die grundsätzliche Anordnung eines Toroidgetriebes in einem allradgetriebenen Fahrzeug;
- Figur 2: ein erstes Ausführungsbeispiel eines Volltoroidgetriebes gemäß der Erfindung mit einseitiger axialer Vorspannung;
- Figur 3: eine Variante des Ausführungsbeispiels der Figur 2 mit doppelseitiger axialer Vorspannung; und
- Figur 4: eine schematische Darstellung eines gesamten Antriebsstrangs mit einem Getriebe gemäß dem Ausführungsbeispiel der Figuren 2.

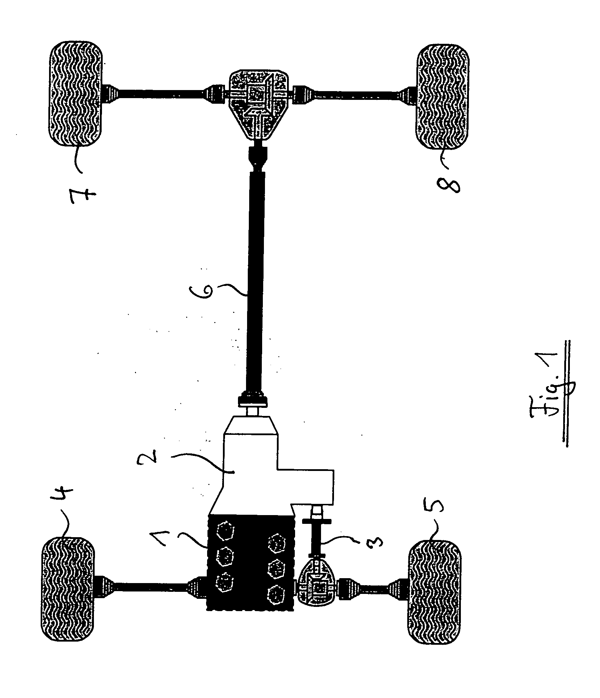

**Figur 1** zeigt ein Fahrzeug mit einem Motor 1, an den ein Toroidgetriebe angeflanscht ist, welches eine erste Ausgangswelle 3 zum Antrieb von Vorderräder 4, 5 sowie eine zweite Ausgangswelle 6 zum Antrieb von Hinterrädern 7, 8 aufweist. Das Volltoroidgetriebe 2 ermöglicht eine beliebige Aufteilung des vom Motor 1 gelieferten Drehmoments auf die Vorderräder 4, 5 bzw. die Hinterräder 7, 8.

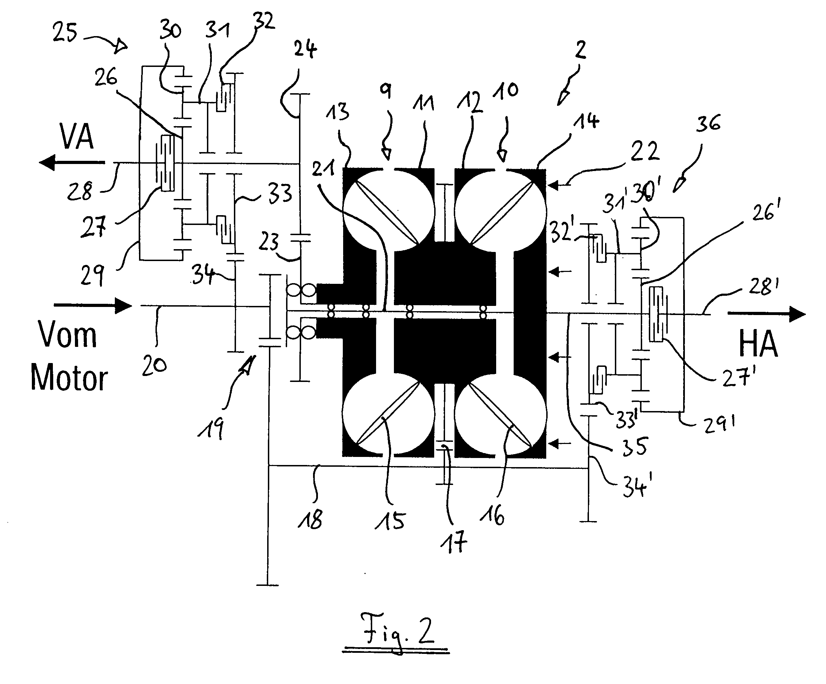

**Figur 2** zeigt Einzelheiten des Volltoroidgetriebes 2. Das Volltoroidgetriebe 2 weist zwei koaxial zueinander angeordnete Volltoroidgetriebeeinheiten 9, 10 auf, von denen die Volltoroidgetriebeeinheit 9 für den Antrieb der Vorderräder und die Volltoroidgetriebeeinheit 10 für den Antrieb der Hinterräder vorgesehen ist. Die beiden Volltoroidgetriebeeinheiten 9, 10 bestehen jeweils aus einer Antriebsscheibe 11, 12 einer Abtriebsscheibe 13, 14 sowie Rollern zur Übertragung von Drehmoment von den Antriebsscheiben 11, 12 auf die zugeordnete Abtriebsscheibe 13 bzw. 14. Die beiden Antriebsscheiben 11, 12 sind hier einstückig miteinander verbunden. Sie sind über eine gemeinsame Verzahnung 17 mit einer Eingangswelle 18 kinematisch gekoppelt. Die Eingangswelle 18 ist über eine Zahnradstufe 19 mit einer Motorwelle 20 verbunden.

Die Abtriebsscheibe 13 ist axial unverschieblich auf einer zentralen Getriebewelle 21 angeordnet. Die Antriebsscheiben 11, 12, sowie die Abtriebsscheibe 14 hingegen sind axial verschieblich auf der zentralen Getriebewelle 21 angeordnet. Eine hier nicht näher dargestellte Axialdruckerzeugungseinrichtung erzeugt eine Axialkraft, was durch Pfeile 22 dargestellt ist. Dadurch werden die Antriebsscheiben 11, 12 und die Abtriebsscheiben 13, 14 in Axialrichtung gegeneinander verspannt, was eine Drehmomentenübertragung über die Roller 15, 16 ermöglicht.

Die Abtriebsscheibe 13 ist über eine Zahnradstufe 23, 24 mit einem ersten Planetengetriebe 25 kinematisch gekoppelt. Das Zahnrad 24 treibt dabei ein Sonnenrad 26 des ersten Planetengetriebes 25 an. Das Sonnenrad 26 steht über eine Sonnenradkupplung 27 mit einer Ausgangswelle 28 in Verbindung. Drehfest verbunden mit der Ausgangswelle 28 ist ein Hohlrad 29. Zwischen dem Sonnenrad 26 und dem Hohlrad 28 sind in Umfangsrichtung verteilt mehrere Planeten 30 angeordnet, die in bekannter Weise an einem Steg 31 gelagert sind. Der Steg 31 ist über eine Stegkupplung 32 drehfest mit einem Zahnrad 33 koppelbar, welches mit einem Zahnrad 34 kämmt, das drehfest auf der Eingangswelle 20 angeordnet ist. Für hohe Abtriebsgeschwindigkeiten an der Ausgangswelle 28 wird die Sonnenradkupplung 27 (High-Clutch) geschlossen, für niedrige Ausgangsgeschwindigkeiten die Stegkupplung 32 (Low Clutch).

Das erste Planetengetriebe 25 bildet ein Summationsgetriebe. Die Drehzahl der Ausgangswelle 28 ist durch die Drehzahl der Eingangswelle 20, der Drehzahl des Zahnrads 24 bzw. der Abtriebsscheibe 13 sowie der Zustände der Sonnenradkupplung 27 und der Stegkupplung 32 festgelegt. Die Drehzahl des Zahnrads 24 wiederum ist durch die Stellung der Roller 15 der ersten Volltoroidgetriebeeinheit einstellbar.

Von der Abtriebsscheibe 14 führt eine Ausgangswelle 35 zu einem zweiten Planetengetriebe 36, das hier identisch aufgebaut ist wie das Planetengetriebe 25. Das Planetengetriebe 36 weist ebenfalls ein Sonnenrad 26', eine Ausgangswelle 28', ein Hohlrad 29', Planeten 30', einen Steg 31', eine Sonnenradkupplung 27' sowie eine Stegkupplung 32'. Die Stegkupplung 32' steht über eine Zahnradstufe 33', 34' mit der Eingangswelle 18 in Verbindung.

Das zweite Planetengetriebe 36 fungiert ebenfalls als Summierungsgetriebe. Die Drehzahl der Ausgangswelle 28' ist festgelegt durch die Drehzahl der Ausgangswelle 35, der Eingangswelle 18 sowie der Stellung der Sonnenradkupplung 27' und der Stegkupplung 32'.

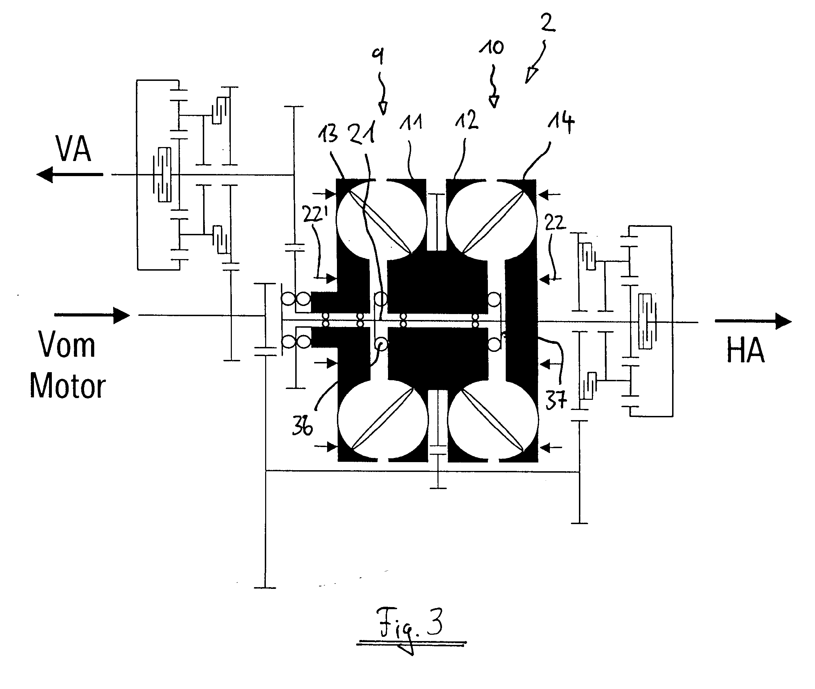

**Figur 3** zeigt eine Variante des Volltoroidgetriebes 2 der **Figur 2**. Im Unterschied zu Figur 2 sind hier die beiden Antriebsscheiben 11, 12 axial unverschieblich durch Axialkugellager 36, 37 auf der zentralen Getriebewelle 21 angeordnet. Ferner sind im Unterschied zum Ausführungsbeispiel der Figur 2 zwei Axialkrafterzeugungseinrichtungen (nicht dargestellt) vorgesehen, welche die beiden Abtriebsscheiben 13, 14 jeweils unabhängig voneinander mit Axialdruck beaufschlagen, was durch Pfeile 22, 22' angedeutet ist. Die Axialdrücke an den Abtriebsscheiben können also bedarfsgerecht in Abhängigkeit von den durch die beiden Volltoroidgetriebeneinheiten 9, 10 zu übertragenden Drehmomenten gewählt werden.

Im übrigen ist das Ausführungsbeispiel der **Figur 3** identisch mit dem der **Figur 2.**

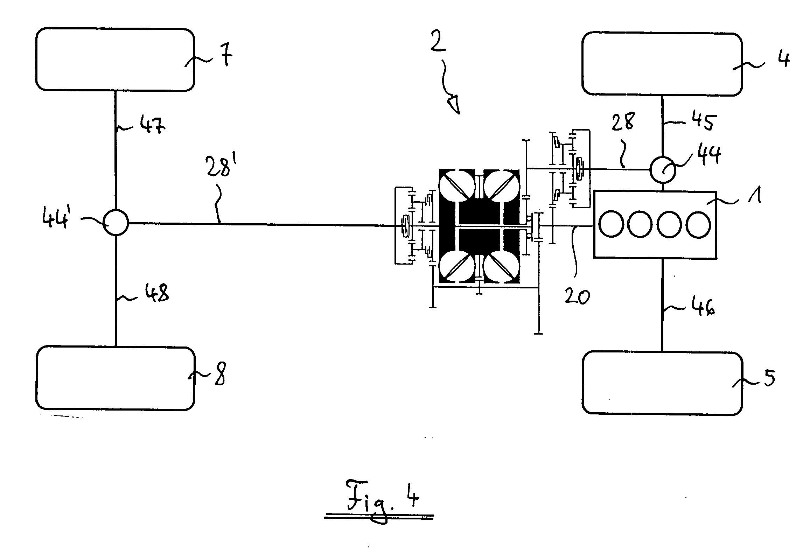

**Figur 4** zeigt in schematischer Darstellung ein Fahrzeug mit Allradantrieb mit einem Volltoroidgetriebe entsprechend dem Ausführungsbeispiel der Figur 2. Das vom Motor 1 gelieferte Drehmoment wird über die Motorwelle 20 in das Volltoroidgetriebe 2 eingespeist. Über Ausgangswellen 28, 28' sowie ein Vorderachsdifferential 44 bzw. Hinterachsdifferential 44' sowie Antriebswellen 45 - 47 wird das Gesamtdrehmoment verteilt und in die Vorderräder 4, 5 bzw. Hinterräder 7, 8 eingeleitet.

## Patentansprüche

1. Stufenloses Getriebe (2) für allradgetriebene Fahrzeuge, mit
einer Antriebswelle (18), welche ein aus einer ersten und einer zweiten Getriebeeinheit (9, 10) gebildetes stufenloses Getriebe (2) antreibt, wobei die erste Getriebeeinheit (9) einen Vorderradantrieb (28) und die zweite Getriebeinheit (10) einen Hinterradantrieb (28') antreibt, **dadurch gekennzeichnet, dass**
der Vorderradantrieb (28) und der Hinterradantrieb (28') jeweils durch einen Ausgang eines zugeordneten Summierungsgetriebes (25, 36) gebildet sind, wobei das zugeordnete Summierungsgetriebe (25, 36) einen ersten Getriebeeingang (24, 26') aufweist, der mit der ersten bzw. zweiten Getriebeeinheit (9, 10) kinematisch gekoppelt ist, und einen zweiten Getriebeeingang (31, 31'), der mit der Antriebswelle (18, 19, 20, 34, 34') kinematisch gekoppelt ist, wobei die Übersetzungen der ersten und zweiten Getriebeeinheit so einstellbar sind, dass die resultierenden Drehzahlen des Vorderradantriebs (28) und des Hinterradantriebs (28') Null werden.

2. Stufenloses Getriebe (2) nach Anspruch 1, wobei das stufenlose Getriebe ein Toroidgetriebe ist und die erste und zweite Getriebeeinheit jeweils durch eine Volltoroidgetriebeeinheit gebildet ist.

3. Stufenloses Getriebe (2) nach Anspruch 1 oder 2, wobei dem Vorderradantrieb (28) und dem Hinterradantrieb ein einziges Summierungsgetriebe (25, 36) gemeinsam zugeordnet ist, wobei das gemeinsame Summierungsgetriebe (25, 36) zwei erste Getriebeeingänge (24, 26') aufweist, die mit der ersten bzw. zweiten Getriebeeinheit (9, 10) kinematisch gekoppelt sind und einen zweiten Getriebeeingang (31, 31'), der mit der Antriebswelle (18, 19, 20, 34, 34') kinematisch gekoppelt ist.

4. Stufenloses Getriebe (2) nach Anspruch 1 oder 2, wobei dem Vorderradantrieb (28) und dem Hinterradantrieb jeweils ein eigenes Summierungsgetriebe (25, 36) zugeordnet ist, wobei die Summierungsgetriebe (25, 36) jeweils einen ersten Getriebeeingang (24, 26') aufweisen, der mit der ersten bzw. zweiten Getriebeeinheit (9, 10) kinematisch gekoppelt ist und einen zweiten Getriebeeingang (31, 31'), der mit der Antriebswelle (18, 19, 20, 34, 34') kinematisch gekoppelt ist.

5. Stufenloses Getriebe (2) nach einem der Ansprüche 1 bis 4, wobei das bzw. die Summierungsgetriebe (25, 36) jeweils Planetengetriebe sind, die jeweils ein Sonnenrad (26, 26'), einen Steg (31, 31') und ein Hohlrad (29, 29') aufweisen.

6. Stufenloses Getriebe (2) nach einem der Anspruch 1, 2, 4 oder 5 wobei der erste Getriebeeingang (24, 26) der Planetengetriebe jeweils kinematisch mit dem zugeordneten Sonnenrad ( 26, 26') gekoppelt ist.

7. Stufenloses Getriebe (2) nach einem der Ansprüche 5 oder 6, wobei das bzw. die Planetengetriebe (25, 36) eine Sonnenradkupplung (27, 27') aufweisen, welche im geschlossenen Zustand den ersten Getriebeeingang (24, 26') mit dem Vorderradantrieb (28) bzw. mit dem Hinterradantrieb (28') verbindet.

8. Stufenloses Getriebe (2) nach einem der Ansprüche 5 bis 7, wobei das Hohlrad (29) des ersten Planetengetriebes (25) mit dem Vorderradantrieb (28) verbunden ist und das Hohlrad (29') des zweiten Planetengetriebes (36) mit dem Hinterradantrieb (28') verbunden ist.

9. Stufenloses Getriebe (2) nach einem der Ansprüche 5 bis 8, wobei die Stege (31, 31') des ersten und zweiten Planetengetriebes (25; 36) jeweils über eine zugeordnete Stegkupplung (32, 32') kinematisch mit der Antriebswelle (18, 19, 20, 34, 34') gekoppelt sind.

10. Stufenloses Getriebe (2) nach einem der Ansprüche 5 bis 9, wobei die Stege (31, 31') des ersten und zweiten Planetengetriebes (25; 36) jeweils über eine zugeordnete Stegkupplung (32, 32') und mindestens eine Zahnradstufe (33, 34; 19, 33', 34') kinematisch mit der Antriebswelle (18, 19, 20, 34, 34') gekoppelt sind.

11. Stufenloses Getriebe (2) nach einem der Ansprüche 2 bis 10, wobei jede Volltoroidgetriebeeinheit eine Antriebsscheibe (11, 12) und eine Abtriebsscheibe (13, 14), sowie mindestens einen zwischen der jeweiligen Antriebsscheibe (11, 12) und der Abtriebsscheibe (13, 14 ) angeordneten Roller (15, 16) aufweist, wobei die beiden Antriebsscheiben (11, 12) zwischen den beiden Abtriebsscheiben (13, 14) angeordnet sind.

12. Stufenloses Getriebe (2) nach Anspruch 11, wobei die beiden Antriebsscheiben (11, 12) drehfest miteinander verbunden und über eine gemeinsame Verzahnung (17) mit der Eingangswelle (18) kinematisch gekoppelt sind.

13. Stufenloses Getriebe (2) nach einem der Ansprüche 11 oder 12, wobei eine zentrale Getriebewelle (21) vorgesehen ist, auf der die Antriebsscheiben (11, 12) und die Abtriebsscheiben (13, 14) angeordnet sind, wobei die beiden Antriebsscheiben (11, 12) in Axialrichtung unverschieblich auf der zentralen Getriebewelle (21) angeordnet sind und die beiden Abtriebsscheiben (13, 14) in Axialrichtung verschieblich auf der zentralen Getriebewelle (21) angeordnet und jeweils unabhängig voneinander durch eine separate zugeordnete Axialkrafterzeugungseinrichtung entsprechend dem zu übertragenden Drehmoment mit einer Axialkraft beaufschlagbar sind.

14. Stufenloses Getriebe (2) nach einem der Ansprüche 11 oder 12, wobei das stufenlose Getriebe eine zentrale Getriebewelle (21) aufweist, auf der die Antriebsscheiben (11, 12) und die Abtriebsscheiben (13, 14) angeordnet sind, wobei die beiden Antriebsscheiben (11, 12) sowie eine der Abtriebsscheiben (14) in Axialrichtung verschieblich auf der zentralen Getriebewelle (21) angeordnet sind und die andere Abtriebsscheibe (13) in Axialrichtung unverschieblich auf der zentralen Getriebewelle (21) angeordnet ist, wobei eine einzige Axialkrafterzeugungseinrichtung vorgesehen ist, welche auf die verschiebliche Abtriebsscheibe (14) eine in Richtung der unverschieblichen Abtriebsscheibe (13) wirkende Axialkraft ausübt.
